# EUROPÄISCHE PATENTSCHRIFT

(11) **EP 0 635 396 B1**
(45) Veröffentlichungstag und Bekanntmachung des Hinweises auf die Patenterteilung: **01.04.1998**
(21) Anmeldenummer: 94110663.5
(22) Anmeldetag: 08.07.1994
(51) Int. Cl.: B60R 9/042

(54) **Vorrichtung zum Anheben und/oder Absenken einer Last auf einen bzw. von einem Lastträger**
Device to raise and/or lower a load to or from a load carrier
Dispositif pour soulever et/ou abaisser une charge sur ou d'un porte-bagages

(30) Priorität: 22.07.1993 DE 4324669
(43) Veröffentlichungstag der Anmeldung: 25.01.1995
(73) Patentinhaber: HS Products AG Systemtechnik und Produktmanagement, 82152 Krailling (DE)
(72) Erfinder: Specht, Martin, Dipl.-Ing. (FH), D-82340 Feldafing (DE); Hausrath, Udo, D-82319 Hadorf (DE); Rösch, Christoph, Dipl.-Ing. (FH), D-82319 Starnberg (DE)
(74) Vertreter: Nöth, Heinz, Dipl.-Phys.

(56) Entgegenhaltungen:
- DE-A- 3 513 085
- DE-U- 8 805 981

## Beschreibung

Die Erfindung betrifft eine Vorrichtung nach dem Oberbegriff des Patentanspruches 1.

Eine derartige Vorrichtung ist zum Anheben und Absenken eines Fahrrades auf einen Dachträger eines Kraftfahrzeugs aus der DE-A-35 13 085 bekannt. Mit einer derartigen Vorrichtung läßt sich ein Fahrrad in stehender Anordnung, d.h. mit auf dem Dachträger aufgesetzten Rädern anheben und vom Dachträger wieder abnehmen.

Die bekannte Vorrichtung besitzt einen Ausleger, der schwenkbar an einem Lastträger, welcher mit einem Dachträger eines Kraftfahrzeugs verbunden ist, angelenkt ist. Am Ausleger sind in Form eines Stützrahmens Befestigungsmittel für das Fahrrad vorgesehen. Der Ausleger kann in einer abgesenkten Position zum Befestigen der Last am Ausleger mittels eines Rastmechanismus fixiert werden und um eine am Lastträger fixierte Achse in eine angehobene Position geschwenkt werden, in welcher der Ausleger zur stabilen Positionierung des Fahrrades am Lastträger mit dem Rastmechnismus fixiert wird. Zum Anheben des Fahrrades ist es erforderlich, den Rastmechanismus zu lösen, damit der Ausleger für das Anheben des Fahrzeugs freigegeben ist.

Aufgabe der Erfindung ist es, eine Vorrichtung der eingangs genannten Art zu schaffen, bei der die Handhabung vereinfacht ist.

Diese Aufgabe wird erfindungsgemäß durch die kennzeichnenden Merkmale des Patentanspruches 1 gelöst.

Durch die Erfindung wird eine exakte abgesenkte Position des Auslegers für ein erleichtertes Befestigen der Last, z.B. eines Fahrrades, sowie eine einfache Befestigung der angehobenen Last am Lastträger erreicht. Ferner kann durch den Kraftspeicher ein erleichtertes Anheben und Absenken der Last erreicht werden.

Dadurch, daß der Kraftspeicher und das Getriebe, das insbesondere als Gelenkgetriebe ausgebildet ist, an einem gemeinsamen Träger gelagert sein können und dadurch, daß die Kraftrichtung, mit welcher der Kraftspeicher auf das Getriebe einwirkt, veränderbar ist, gewinnt man eine Baueinheit, die an einem Lastträger befestigt werden kann, welcher mit einem Fahrzeugaufbau verbunden werden kann. Diese Baueinheit kann an beliebigen Lastträgern, beispielsweise Dachträgern oder im Bereich der Hecktüre eines Fahrzeugs angeordneten Trägern, befestigt werden. Der Kraftspeicher und das Getriebe, welches die Antriebsbewegung des Kraftspeichers überträgt, sind an einem gemeinsamen Träger abgestützt, der mit einem an einem Fahrzeug oder an einer Wand oder Decke eines Keller-, Unterstell-, Garagenraumes oder dgl. befestigbaren Lastträger verbunden werden kann.

Um die verschiedenen Funktionen der Hubvorrichtung beim Anheben der Last, beim Absenken der Last, beim Befestigen der Last erfüllen zu können, kann die vom Kraftspeicher gelieferte Kraft, welche eine Druckkraft oder Zugkraft sein kann, in verschiedene Richtungen ausgerichtet werden. In bevorzugter Weise kann das Getriebe so ausgebildet sein, daß es eine Totpunktlage aufweist. Auf der einen Seite der Totpunktlage kann die vom Kraftspeicher ausgehende Antriebskraft durch einen am gemeinsamen Träger vorgesehenen Anschlag aufgenommen werden. Durch diesen Anschlag kann eine Ruheposition, die das Getriebe und die damit verbundene Hubeinrichtung einnehmen kann, erreicht werden. Auf der anderen Seite der Totpunktlage kann die speicherkraft auf das Getriebe in Hubrichtung antreibend wirken. Hierdurch wird beim Anheben einer Last die erforderliche Hubkraft von dem Kraftspeicher geliefert. Ferner kann beim Absenken der Last vom Lastträger die in Hubrichtung wirkende Speicherkraft die Gewichtskraft der abzunehmenden Last vermindern. Auf diese Weise wird sowohl das Anheben als auch das Absenken der Last erleichtert.

Wenn sich das Getriebe und der Kraftspeicher auf der anderen Seite der Totpunktlage befindet, in welcher die Ruheposition definiert ist, wird durch die auf den Anschlag ausgeübte Speicherkraft eine stabilisierende Wirkung auf die in Ruheposition befindlichen Bauteile des Getriebes und der Hubvorrichtung erreicht. Um Kraftrichtungen beidseits der Totpunktlage des Getriebes zu erreichen, kann der Kraftspeicher am gemeinsamen Träger um eine Anlenkstelle schwenkbar sein. Der Kraftspeicher kann eine Feder, z.B. Gasdruckfeder, ein Elektroantrieb oder dergleichen sein.

Die Antriebskraft des Kraftspeichers kann direkt oder über eine Koppel auf eine am gemeinsamen Träger schwenkbar gelagerte Schwinge übertragen werden. Die Schwinge überträgt die Antriebsbewegung bzw. Antriebskraft auf die Hubvorrichtung, mit welcher die Last auf den Lastträger gehoben bzw. von dort abgesenkt wird.

Hierzu kann der Ausleger der Hubvorrichtung einen Schwenkarm aufweisen, der mit der Schwinge koppelbar ist. In bevorzugter Weise sind die Schwinge und der Schwenkarm um eine gemeinsame Schwenkachse am gemeinsamen Träger gelagert.

Durch die Hubvorrichtung können Lasten, wie Surfbretter, Boxen, Zweiräder, z.B. Mopeds oder Fahrräder, auf einen im Bereich der Hecktüre oder dem Kofferraumdeckel an einem Fahrzeug vorgesehenen Lastträger oder auf einen Dachträger angehoben und von dort wieder abgesenkt werden.

Zum Anheben eines Zweirades, beispielsweise eines Mopeds, Leichtmotorrades oder Fahrrades, kann am Schwenkarm der Hubvorrichtung ein Zweiradhalter vorgesehen sein, der wenigstens ein Greiferelement aufweist, das mit einem zylindrischen Bauteil des Zweirades in Eingriff bringbar ist. Dieses Greiferelement besitzt in einem Kopfstück eine offene Ausnehmung, an deren einer Öffnungsseie eine Drehfalle in der Weise schwenkbar gelagert ist, daß die Innenkonturen der beiden Ausnehmungen in der Schließstellung der Drehfalle das zylindrische Bauteil des Zweirades umfassen.

Am Kopfstück kann ferner ein unter Federvorspannung stehendes Rastelement verschiebbar angeordnet sein, das in die Drehfalle in der Schließstellung eingreift.

Ferner kann der Zweiradhalter eine teleskopierbare Haltestange aufweisen, die an ihren beiden Enden derart ausgebildete Greiferelemente besitzt. Die Haltestange kann in Ausziehrichtung eine Federvorspannung haben, welche in der Weise auf die Drehfalle des jeweiligen Greiferelements einwirkt, daß dieses beim Umfassen des zylindrischen Bauteils des Zweirades in die Schließstellung gedreht wird. Hierzu besitzt die Drehfalle eine entsprechend angeordnete Drehachse am Kopfstück des Greiferelements und ist entsprechend ausgebildet.

Anhand von Ausführungsbeispielen wird die Erfindung noch näher erläutert. Es zeigt:
- Fig. 1:: eine Hubvorrichtung für ein Zweirad, insbesondere Fahrrad, bei welcher ein Ausführungsbeispiel der Erfindung zur Anwendung kommt;
- Fig. 2:: eine spezielle Ausbildung der Hubvorrichtung für das Fahrrad;
- Fig. 3:: eine weitere Ausbildungsform der Hubvorrichtung für das Fahrrad;
- Fig. 4:: ein Greiferelement, welches bei den in den Figuren 1 bis 4 dargestellten Ausführungsformen zur Anwendung kommen kann, in geöffneter Stellung;
- Fig. 5:: das in Fig. 4 dargestellte Greiferelement in Schließstellung;
- Fig. 6:: ein Ausführungsbeispiel für eine einen Kraftspeicher und ein Getriebe enthaltene Baueinheit, welche bei den in den Figuren 1 bis 3 dargestellten Ausführungsformen zur Anwendung kommen kann, in einer ersten Betriebsstellung;
- Fig. 7:: die in Fig. 6 dargestellte Ausführungsform in einer zweiten Betriebsstellung;
- Fig. 8:: die in den Figuren 6 und 7 dargestellte Ausführungsform in einer dritten Betriebsstellung; und
- Fig. 9:: ein weiteres Ausführungsbeispiel für eine den Kraftspeicher und das Getriebe der Hubvorrichtung enthaltenden Baueinheit;
- Fig. 10:: ein weiteres Ausführungsbeispiel für eine Hubvorrichtung; und
- Fig. 11:: ein weiteres Ausführungsbeispiel für einen Kraftspeicher.

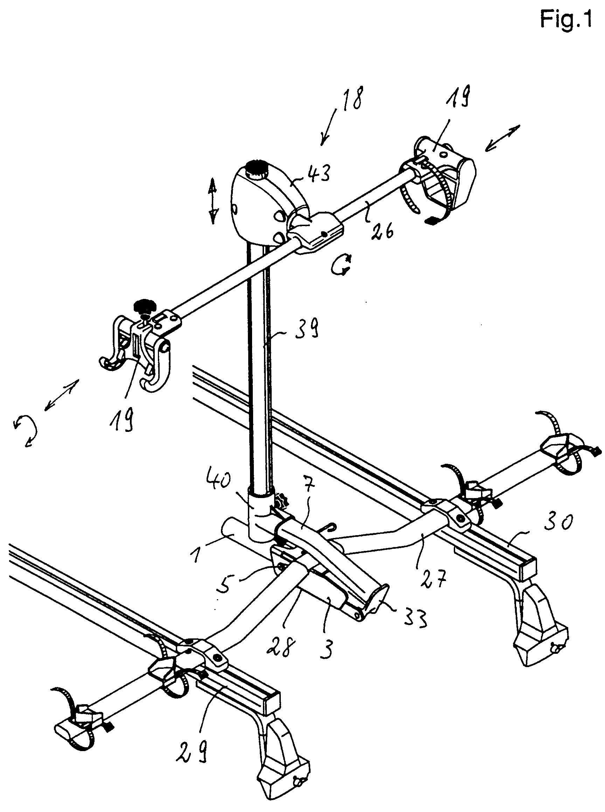

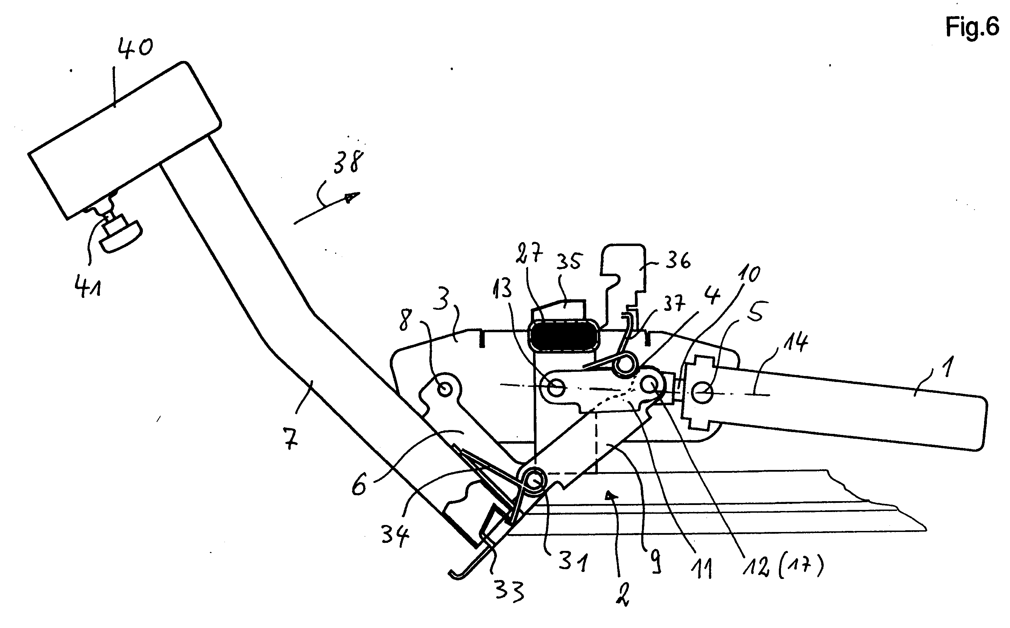

In der Fig. 1 ist schematisch in perspektivischer Darstellung ein Dachträger eines Kraftfahrzeugs dargestellt. Mit einer Trägerbrücke 27 des Dachträgers ist eine Baueinheit 28 verbunden, welche an einem als Rahmenblech ausgebildeten gemeinsamen Träger 3, einen Kraftspeicher 1 und ein Getriebe 2, wie sie in den Figuren 6 bis 9 dargestellt sind, aufweist.

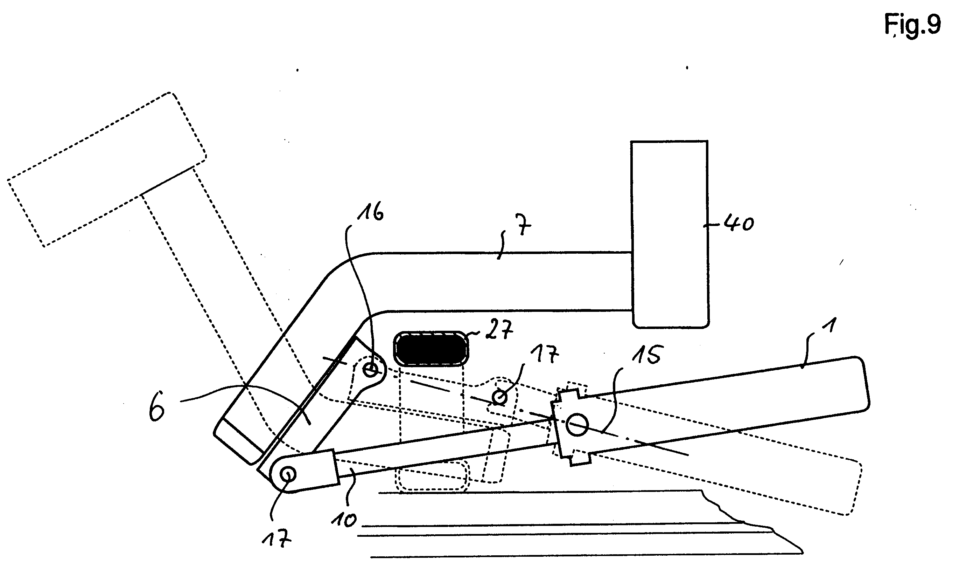

Die Trägerbrücke 27 erstreckt sich zwischen zwei Querholmen 29, 30 des Dachträgers und ist an diesem befestigt. Die Baueinheit 28 ist mit dem gemeinsamen Träger 3 (Rahmenblech) an der Trägerbrücke 27 befestigt. Ein erstes Ausführunbsbeispiel der Baueinheit ist in den Figuren 6 bis 8 dargestellt. Ein zweites Ausführungsbeispiel der Baueinheit ist in der Fig. 9 dargestellt. Für gleichwirkende Bauteile werden in den Fig. 6 bis 9 die gleichen Bezugsziffern verwendet.

Der Kraftspeicher 1 ist schwenkbar an einer Anlenkstelle 5 am gemeinsamen Träger 3 befestigt. Beim Ausführungsbeispiel der Figuren 6 bis 8 besteht das Getriebe 2 aus einem Gelenkgetriebe. Dieses Gelenkgetriebe hat eine erste Schwinge 6, die um eine Schwenkachse 8 am gemeinsamen Träger 3 gelagert ist. Die Schwenkachse 8 befindet sich an einem Ende der Schwinge 6. Am anderen Ende der Schwinge 6 befindet sich eine Gelenkstelle 31, über welche die Schwinge 6 mit einer Koppel 9 verbunden ist. Die Gelenkstelle 31 befindet sich am einen Ende der Koppel 9. An ihrem anderen Ende ist die Koppel 9 über eine weitere Gelenkstelle 12 mit einem Antriebsmittel 10 des Kraftspeichers 1 verbunden.

Bei den dargestellten Ausführungsbeispielen der Figuren 6 bis 9 ist der Kraftspeicher 1 als Gasdruckfeder ausgebildet. Der Kraftspeicher kann auch von einer mechanischen Druckfeder gebildet werden. Anstelle einer Druckfeder kann auch eine Zugfeder zum Einsatz kommen, die bezüglich einer Angriffsstelle 17, welche beim dargestellten Ausführungsbeispiel mit der Gelenkstelle 12 zusammenfällt, entgegengesetzt angeordnet ist, jedoch die gleichen Kraftrichtungen hat wie der dargestellte Kraftspeicher 1. Auch eine Torsionsfeder, z.B. Drehstab ist als Kraftspeicher geeignet.

Beim Ausführungsbeispiel ist das Antriebsmittel als Kolbenstange ausgebildet, die über eine Gabel an einem Gelenkbolzen, welcher das Gelenk 12 bildet, angreift und so die Angriffsstelle 17 zwischen Koppel 9 und Antriebsmittel 10 bildet.

Mit der Gelenkstelle 12 bzw. dem Gelenkbolzen ist eine zweite Schwinge 11 mit ihrem einen Ende verbunden. Das andere Ende der Schwinge 11 ist an einer weiteren Gelenkstelle 13 am gemeinsamen Träger 3 gelagert. Während die erste Schwinge 6 die Antriebsbewegung, wie noch erläutert wird, auf eine Hubvorrichtung überträgt und somit auch als Hubschwinge bezeichnet werden kann, hat die zweite Schwinge 11 eine Führungsfunktion für die Angriffsstelle 17, an welcher das Antriebsmittel 10 an der Koppel 9 angreift. Die Angriffsstelle 17 wird durch die Schwinge 11 auf einer Kreisbahn um die Gelenkstelle 13 geführt.

Bei dem in den Figuren 6 bis 8 dargestellten Ausführungsbeispiel besitzt das Gelenkgetriebe vier Gelenkstellen, nämlich die Gelenkstelle 8 für die erste Schwinge 6, die Gelenkstelle 31 zwischen der Schwinge 6 und der Koppel 9, die dritte Gelenkstelle 12 zwischen der Koppel 9 und der zweiten Schwinge 11, wobei an dieser Gelenkstelle die Angriffsstelle 17 für das Antriebsmittel 10 liegt, und die vierte Gelenkstelle 13, in welcher die zweite Schwinge 11 am Träger 3 gelagert ist.

Im folgenden wird die Arbeitsweise der Baueinheit 28 noch näher erläutert anhand der Figuren 6 bis 8.

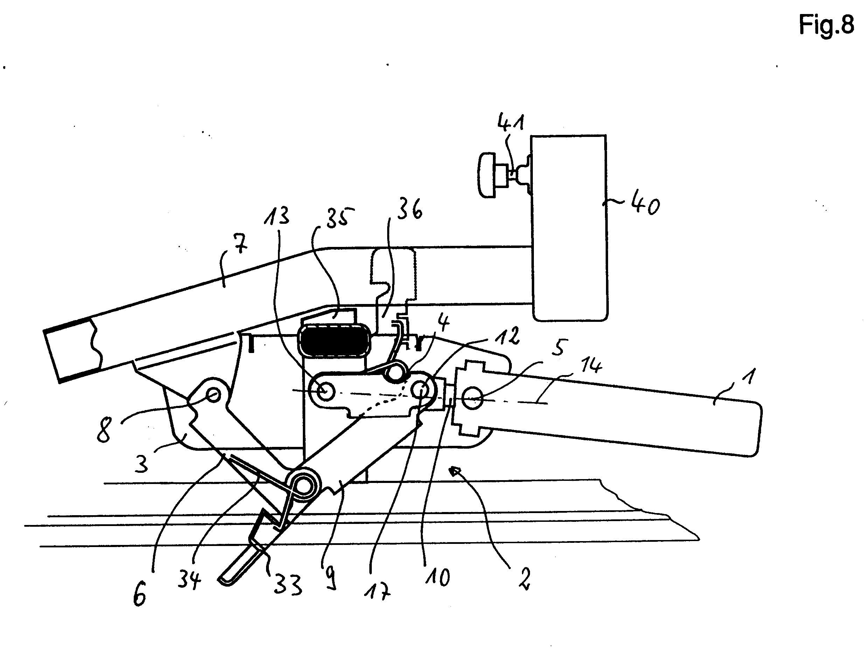

Ein zu einer Hubvorrichtung gehöriger Schwenkarm 7 ist schwenkbar an der Gelenkstelle 8 am gemeinsamen Träger 3 gelagert. Der Schwenkarm 7 hat somit eine gemeinsame Schwenkachse mit der ersten Schwinge 6. Zur Übertragung der Antriebsbewegung bzw. der Antriebskraft, welche vom Energiespeicher 1 über die Koppel 9 vermittelt wird, auf den Schwenkarm 7 ist eine Verriegelungseinrichtung 33, die als durch eine Feder 34 vorgespannter Verriegelungshebel ausgebildet ist, an der Schwinge 6 vorgesehen. Die Verriegelungseinrichtung 33 bzw. der Verriegelungshebel ist um die Gelenkstelle 31 schwenkbar und wird durch die Feder 34 in die Verriegelungsposition vorgespannt. In der Figur 8 ist der Schwenkarm 7 von der Schwinge 6 entriegelt. Er liegt auf einem Anschlaggummi 35 auf der Trägerbrücke 27 auf und nimmt die in der Figur 1 dargestellte Position ein. In dieser Position ist der Schwenkarm 7 über eine weitere Verriegelungseinrichtung 36 in Form eines schwenkbar am gemeinsamen Träger 3 gelagerten Verriegelungshebels verriegelt. Der Verriegelungshebel 36 wird durch eine Feder 37 in Verriegelungsposition vorgespannt. In dieser Position kann beispielsweise eine Last auf dem Dachträger gehalten werden. Bei dem dargestellten Ausführungsbeispiel handelt es sich um ein Fahrrad, das in aufrechter Position, wie im einzelnen noch erläutert wird, über einen Zweiradträger 18 auf dem Dachträger gehalten wird.

Zur Stabilisierung der Position des Getriebes 2 in der in der Figur 8 dargestellten Betriebsstellung befindet sich der Kraftspeicher 1 in einer Ruheposition. In dieser Ruheposition befindet sich die Angriffsstelle 17 zwischen dem Antriebsmittel 10 und der Koppel 9 oberhalb einer strichpunktiert eingezeichneten Verbindungslinie 14 zwischen der Anlenkstelle 5 und der Gelenkstelle 13, welche die Totpunktlage des Getriebes 2 und der durch den Kraftspeicher 1 dargestellten Antriebseinrichtung bildet. Die Kraftrichtung des Kraftspeichers 1 liegt in einer Verbindungslinie zwischen der Anlenkstelle 5 und der Angriffsstelle 17. In dieser Position liegt die zweite Schwinge 11 an einem Anschlag 4 am gemeinsamen Träger 3 an. Der Anschlag 4 nimmt die Antriebskraft des Kraftspeichers 1 auf, und hierdurch wird gewährleistet, daß die Bestandteile des Getriebes in einer stabilen Ruheposition gehalten werden. Die auf dem Dachträger befindliche Last, beispielsweise das Fahrrad oder eine Gepäckbox, ein Surfbrett oder dergl., welche zusätzlich mit dem Dachträger noch verbunden sind, können dann vom Fahrzeug transportiert werden. Aufgrund der stabilisierenden Wirkung, den die vom Kraftspeicher 1 vermittelte Kraft auf die gegen den Anschlag 4 angelegten Bestandteile des Getriebes 2 ausübt, verbleiben während des Fahrens des Fahrzeugs der Kraftspeicher 1 und das Getriebe 2 in der dargestellten Ruheposition.

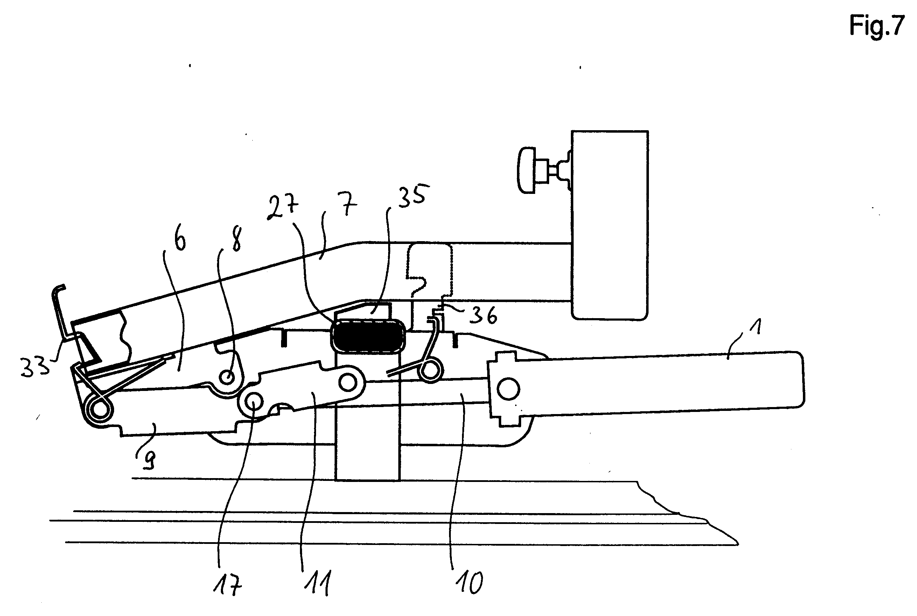

Die in der Figur 8 dargestellte Positionierung können der Schwenkhebel 7, das Getriebe 2 und der Energiespeicher 1 dann einnehmen, wenn keine Last auf dem Dachträger bzw. an der Hubvorrichtung vorhanden ist. Um eine Last vom Boden aufzunehmen und anzuheben, wird der Schwenkhebel 7 nach Lösen der Verriegelungseinrichtung 36 um die Schwenkachse 8 geschwenkt und über die Verriegelungseinrichtung 33 mit der ersten Schwinge 6 gekoppelt, so daß er mit der Schwinge 6 eine gemeinsame Drehung um die gemeinsame Schwenkachse 8 ausführen kann. Mit der Schwenkachse 7 kann, wie aus den Figuren 1 bis 3 zu ersehen ist, ein Zweiradhalter 18 verbunden sein. Er kann jedoch auch mit einem anderen Lasthalter verbunden sein, beispielsweise einem Lasthalter zur Aufnahme einer Gepäckbox oder eines Surfbretts oder eines Skipacks und dergl. Beim Befestigen der Last am Halter 18 befindet sich die Angriffsstelle 17 weiterhin in der in der Figur 8 dargestellten Totpunktlage oberhalb der Verbindungslinie 14. Die Gesamtanordnung wird daher für die Lastaufnahme in einer stabilen Position gehalten. Zum Anheben der Last wird nun der Lasthalter 18 bzw. der damit verbundene Schwenkarm 7 um eine kurze Strecke um die Schwenkachse 8 geschwenkt, wobei diese Schwenkbewegung (Pfeil 38) im Uhrzeigersinn auf die Schwinge 6 und von dort über die Koppel 9 auf die Angriffsstelle 17 übertragen wird. Die Angriffsstelle 17 wird dabei in eine Position bewegt, die unterhalb der Verbindungslinie 14 (Totpunktlage) liegt. In dieser Position wirkt die Kraft des Kraftspeichers 1 in der Weise, daß das Antriebsmittel 10, d.h. die Kolbenstange, aus dem Gehäuse des Energiespeichers 1 herausgedrückt wird. Diese Bewegung wird über die Koppel 9, die Gelenkstelle 31 auf die Schwinge 6 und somit auf den angekoppelten Schwenkarm 7 übertragen, so daß dieser weiter in Richtung des Pfeiles 38 bewegt wird. Dabei wird die über den Lasthalter 18 mit dem Schwenkarm 7 verbundene Last angehoben. Die Last kann über einen mit dem Schwenkarm 7 verbundenen Auslegerarm 39 angehoben werden. Der Auslegerarm 39 ist mit dem Schwenkarm 7 durch Einstecken in eine Rohrhülse 40 und Festklemmen mit Hilfe einer Klemmschraube 41 verbunden. Der Schwenkarm 7 wird so lange verschwenkt, bis er in die in der Figur 7 dargestellte Position kommt. Der Schwenkarm 7 befindet sich dann in der durch die Verriegelungseinrichtung 36 verriegelten Position der Figur 8.

Beim Anheben der Last bzw. beim Verschwenken des Schwenkarms 7 in der Pfeilrichtung 38 hat die Antriebskraft des Kraftspeichers 1 unterstützend über die Koppel 9 und die Schwinge 6 in Hubrichtung eingewirkt, so daß praktisch ohne manuellen Kraftaufwand oder nur mit vermindertem manuellem Kraftaufwand die Last in die gewünschte Lage auf dem Gepäckträger gebracht wird.

Um die Last vom Gepäckträger wieder abnehmen zu können, verbleiben während des Transports die Bauteile des Getriebes und der Kraftspeicher in den in Figur 7 dargestellten Positionen. Dabei wird die Koppelung der ersten Schwinge 6 und dem Schwenkarm 7 durch die Verriegelung 33 beibehalten. Diese Stellung ist auch in der Figur 1 dargestellt. Das Antriebsmittel 10 in Form der Schubstange ist aus dem Kraftspeicher 1 ausgefahren. Durch die dabei vom Energiespeicher 1 vermittelte Kraft, welche in der Angriffsstelle 17 auf die Getriebeteile ausgeübt wird, und durch die Haltekraft der Verriegelungseinrichtung 36 am Schwenkarm 7 wird eine stabile Positionierung während des Lasttransports gewährleistet.

Um die Last von dem Lastträger wieder abzunehmen, wird die Gewichtskraft, welche von der abzusenkenden Last ausgeübt wird, gemildert durch die Antriebskraft des Kraftspeichers 1, welche entgegengesetzt zur Absenkrichtung (entgegengesetzt zum Pfeil 38 in der Figur 6) über das Antriebsmittel 10, die Koppel 9, die Schwinge 6 auf den Schwenkarm 7 zur Wirkung kommt. Hierdurch wird das Annehmen der Last vom Dachträger bzw. vom Lastträger erleichtert. Während des Ansenkens kommen die Bauteile des Getriebes 2 und der Kraftspeicher 1 wieder in die in der Figur 6 dargestellte Endposition, in welcher die Last vom Lastträger 18 abgenommen werden kann. Wenn die Hubeinrichtung bzw. der Lastträger ohne Last am Fahrzeug verbleiben sollen, wird die Verriegelungseinrichtung 33 zwischen der Schwinge 6 und dem Schwenkarm 7 gelöst, so daß der Schwenkarm 7 in seine durch die Verriegelungseinrichtung 36 verriegelte Ruheposition (Figur 8) gebracht werden kann. Wie oben schon erläutert, verbleiben aufgrund der Lage des Angriffspunktes 17 oberhalb der Totpunktlinie 14 der Kraftspeicher 1 und die Bauteile des Getriebes 2 ebenfalls in der in der Figur 8 dargestellten Ruheposition. Durch die Führungsfunktion der zweiten Schwinge 11, die diese auf die Angriffsstelle 17 ausübt, werden die verschiedenen Bauteile des Getriebes 2 und der Kraftspeicher 1 immer definiert geführt. Die Angriffsstelle 17 wird durch die zweite Schwinge 11 auf einer Kreisbahn um die Gelenkstelle 13 am gemeinsamen Träger 3 geführt.

Während bei dem in den Figuren 6 bis 8 dargestellten Ausführungsbeispiel vier Gelenkstellen, welche durch Gelenkbolzen gebildet werden, vorgesehen sind, hat das in der Figur 9 dargestellte Ausführungsbeispiel drei Gelenkstellen. Anstelle zweier Schwingen ist eine Schwinge 6 vorgesehen, die um eine Gelenkstelle 16 am gemeinsamen Träger 3 schwenkbar ist. In der Figur 9 sind in ausgezogenen Linien die Stellung dargestellt, welche die Bauteile in der angehobenen Ruheposition einnehmen und in strichlierten Linien die Position, welche die Bauteile in der abgesenkten Position einnehmen. Hieraus ist ersichtlich, daß die Angriffsstelle 17 in der Ruheposition der abgesenkten Hubeinrichtung oberhalb einer Verbindungslinie 15 zwischen der Anlenkstelle 16 und der Anlenkstelle 5, welche die Totpunktlage bildet, liegt. In dieser Position kann die Einrichtung bei entkoppeltem Schwenkarm 7 (Äquivalent zu Figur 8) gehalten werden.

Ein weiterer Unterschied gegenüber dem Ausführungsbeispiel der Figuren 6 bis 8 besteht noch darin, daß das Antriebsmittel 10 direkt an der Schwinge 6 in der Angriffsstelle 17 angreift. Die Koppel 9 kann daher entfallen.

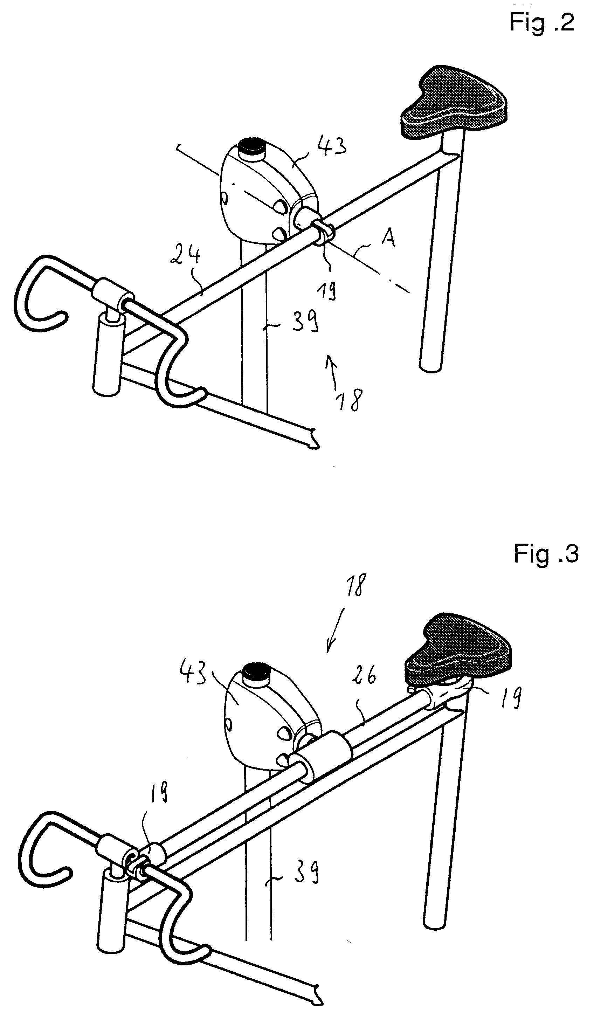

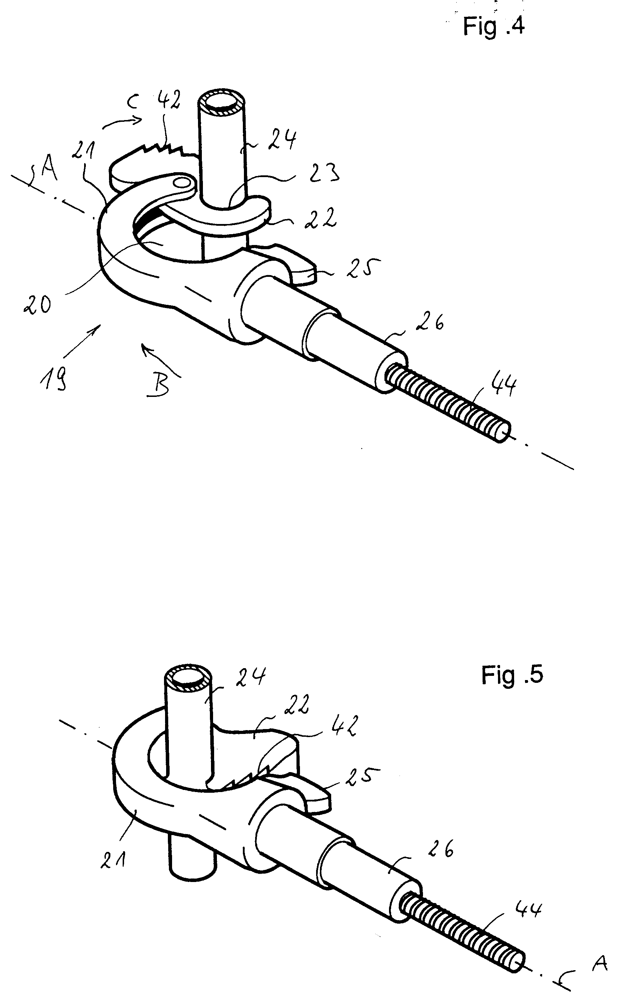

In den Figuren 1 bis 3 ist ein Halter 18 für eine Last, welcher bei dem dargestellten Ausführungsbeipiel ein Zweiradhalter ist, dargestellt. Dieser Zweiradhalter besitzt, wie insbesondere aus der Figur 2 zu ersehen ist, wenigstens ein Greiferelement 19, das mit einem zylindrischen Bauteil 24 des Zweirades, beispielsweise Fahrrad, in Eingriff bringbar ist. In den Figuren 4 und 5 ist das Greiferelement 19 im einzelnen dargestellt. Das Greiferelement besitzt ein Kopfstück 21 mit einer offenen Ausnehmung 20. Die Ausnehmung 20 besitzt eine bogenförmige Innenkontur, die in bevorzugter Weise von der Kreisform abweicht. An der einen Seite der Ausnehmungsöffnung ist am Kopfstück 21 eine Drehfalle 22. Die Drehfalle 22 besitzt ebenfalls eine geöffnete Ausnehmung 23. Die Drehfalle 22 ist in die im Kopfstück 21 vorgesehene Ausnehmung 20 hinein in eine Schließstellung (Figur 5) schwenkbar. In der Schließstellung umfassen die Innenkonturen der beiden Ausnehmungen 20 und 23 das zylindrische Bauteil 24. Mit Hilfe eines Rastelements 25, welches mit Federvorspannung in Richtung von Rastzähnen 42 an der Drehfalle 22 verschiebbar vorgespannt ist, kann die Drehfalle 22 in der Schließstellung gehalten werden. In dieser Stellung greift das Rastelement 25 in einen der Rastzähne 42 ein.

Wie aus der Figur 2 zu ersehen ist, kann ein Greiferelement 19 mittels eines Befestigungsstückes 43 am Ausleger 39 des Lastträgers 18 befestigt sein. Das Greiferelement 19 kann um eine Achse A drehbar sein. Diese verläuft im wesentlichen senkrecht zu dem zylindrischen Bauteil 24, welches vom Greiferelement 19 erfaßt wird. Durch die Höhenverstellbarkeit des Befesitungsstückes 43 und die Verschwenkbarkeit des Greiferelements 19 kann eine genaue Positionierung der angehobenen Last, beispielsweise des Zweirades, auf den Dachträger in der beispielsweise in Figur 1 dargestellten aufrechten Position erfolgen.

Der Lasthalter 18 kann ferner eine teleskopierbare Haltestange 26 aufweisen, die an ihren beiden Enden Greiferelemente 19 aufweist. Die Greiferelemente 19 können mit unterschiedlichen Bauteilen des Zweirades in Eingriff gebracht werden, beispielsweise mit der Lenkerkopfstange und der Sattelstange eines Zweirades (Figur 1) oder mit dem Lenker und der Sattelstange eines Zweirades (Figur 3). Durch die Teleskopierbarkeit der Haltestange 26 und die schwenkbare Lagerung des jeweiligen Greiferelements 19 an der Haltestange erreicht man eine optimale Einstellung auf die Abmessungen der zu befestigenden Last.

Die Haltestange 26 kann in ihrer axialen Richtung eine Federvorspannung (Feder 44 in den Figuren 4 und 5) aufweisen, die in Auszugsrichtung (Pfeil B in Figur 4) wirkt. Durch diese Federvorspannung wird das Einschwenken (Pfeilrichtung C in Figur 4) der Drehfalle 22 in ihre Schließstellung unterstützt. Die beiden Ausnehmungen 20 und 23 sind so geformt, daß das Kopfstück 21 und die Drehfalle 22 Aufnahmegabeln für das zylindrische Bauteil 24 bilden. In der Schließstellung wirken die beiden Gabelteile in der Form zusammen, daß sie das zu ergreifende zylindrische Bauteil 24 erfassen (Figur 5). Wie die Figur 4 zeigt, wirkt die Gabelform der Drehfalle 22, in welche das zylindrische Bauteil 24 eingesetzt ist, mit der Vorspannung der Feder 44 in der Weise zusammen, daß das Einschwenken in die Schließstellung (Figur 5) praktisch selbsttätig erfolgt. In dieser Schließstellung hat man eine stabile Positionierung der festzuhaltenden Last, die noch durch das Rastelement 25, welches in die Rastzähne 42 der Drehfalle 22 eingreifen, unterstützt wird.

Durch entsprechende Ausbildung des Befestigungsstückes 43 können an diesem auch mehr als eine Haltestange 26 befestigt werden, so daß zwei oder auch drei Fahrräder gleichzeitig angehoben und abgesenkt werden können.

Die Rohrhülse 40, in welche der Auslegerarm 39 eingesteckt ist, kann auch um eine zusätzliche horizontale Achse schwenkbar sein, so daß der Auslegerarm 39 und die Befestigungsstange flach am Dachträger angeordnet werden können.

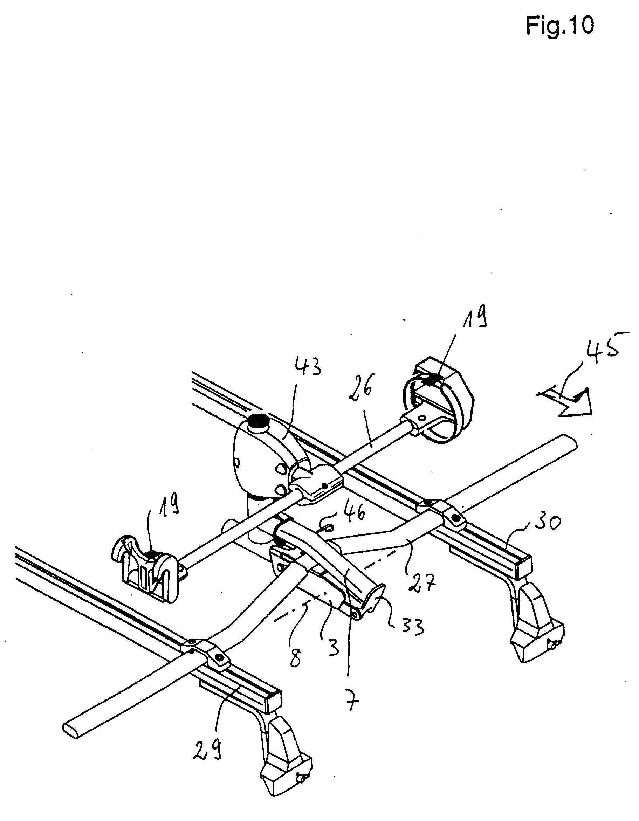

In der Fig. 10 ist ein weiteres Ausführungsbeispiel der Hubvorrichtung dargestellt. Bei diesem Ausführungsbeispiel wird die angehobene Last, beispielsweise das Fahrrad, um die Achse 8 in die angehobene Position, beispielsweise auf das Dach eines Fahrzeugs geschwenkt. Die Lenkstange und der Sattel des Fahrrades sind mit Hilfe der Greiferelemente 19 an der Haltestange 26 befestigt. Die Haltestange 26 ist starr im Befestigungsstück 43 beim Hochschwenken der Last bzw. des Fahrrades festgelegt. Der Ausleger wird bei diesem Ausführungsbeispiel von dem Schwenkarm 7 gebildet. Wenn es sich bei der Last um ein Fahrrad handelt, ist dieses in umgekehrter Anordnung auf dem Lastträger angeordnet. Der Schwenkarm 7 kann beispielsweise mit Hilfe einer Arretier- bzw. Fixiereinrichtung 46 am Träger 3 fixiert werden.

Um die Handhabung der Hubeinrichtung, insbesondere beim Befestigen der Last in der abgesenkten Position zu erleichtern, kann die Hubeinrichtung und insbesondere die Trägerbrücke 27 an ihren beiden Enden verschiebbar (Pfeil 45) an den beiden Querholmen 29, 30 gelagert sein.

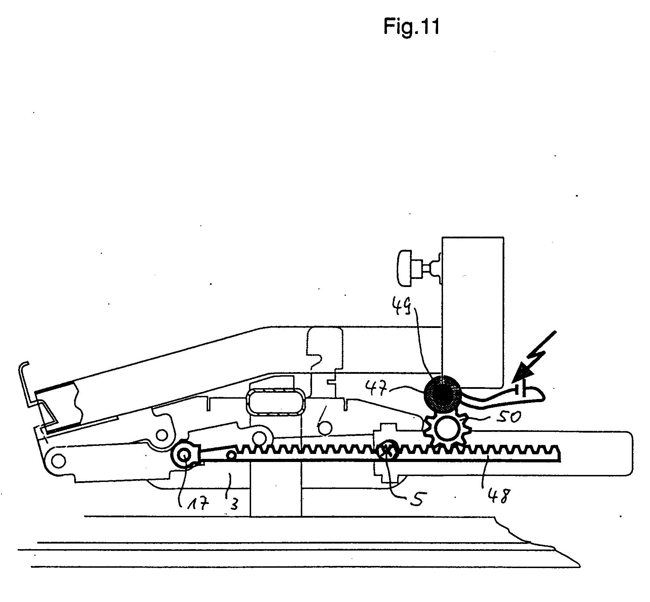

In der Fig. 11 ist ein weiteres Ausführungsbeispiel für einen Kraftspeicher dargestellt. Der Kraftspeicher besteht bei diesem Ausführungsbeispiel aus einem Elektroantrieb, insbesondere Gleichstrommotor, der beispielsweise über ein Kabel an die Batterie eines Kraftfahrzeuges anschließbar ist. Das Drehmoment des Elektromotors 47 wird über eine Zahnstange 48, welche von der Motorwelle 49 über ein Ritzel 50 angetrieben wird, auf die Angriffsstelle 17 übertragen. Der Elektromotor 47 und ein Zahnstangengehäuse sind als Einheit über die Anlenkstelle 5 am gemeinsamen Träger 3 schwenkbar gelagert, wie das bei den vorher beschriebenen Ausfühungsbeispielen ebenfalls der Fall ist. Der in der Fig. 11 dargestellte Elektroantrieb kann mit Hilfe einer Zwangssteuerung zur funktionsgerechten Drehmomenterzeugung gesteuert werden.

## Patentansprüche

1. Vorrichtung zum Anheben und/oder Absenken einer Last auf einen bzw. von einem Lastträger mit einem Ausleger (7, 39), der schwenkbar am Lastträger (27, 29, 30) angelenkt ist, und mit am Ausleger vorgesehenen Befestigungsmitteln für eine Last, wobei der Ausleger um eine am Lastträger fixierte Achse (8) in eine angehobene Position schwenkbar ist, in welcher der Ausleger zur stabilen Positionierung der angehobenen Last am Lastträger fixierbar ist,
dadurch **gekennzeichnet,** daß
der Ausleger (7, 39) in einer abgesenkten Position zum Befestigen der Last am Ausleger an einem mit dem Lastträger (27, 29, 30) kraftschlüssig verbundenen Anschlag (4) anliegt und daß der Ausleger über ein Getriebe (2) mit einem Kraftspeicher (1) zur Übertragung einer Kraft des Kraftspeichers auf die Last verbunden ist.

2. Vorrichtung nach Anspruch 1, dadurch gekennzeichnet, daß die Last am Ausleger (7) starr befestigbar ist.

3. Vorrichtung nach Anspruch 1, dadurch gekennzeichnet, daß die Last am Ausleger (7, 39) gelenkig befestigbar ist.

4. Vorrichtung nach Anspruch 1, dadurch gekennzeichnet, daß der Kraftspeicher (1) und das Getriebe (2) an einem gemeinsamen Träger (3) gelagert sind und daß die Kraftrichtung, mit welcher der Kraftspeicher (1) auf das Getriebe (2) wirkt, veränderbar ist.

5. Vorrichtung nach Anspruch 4, dadurch gekennzeichnet, daß die Kraftrichtungen des Kraftspeichers (1) zu beiden Seiten einer Totpunktlage des Getriebes (2) liegen, wobei auf der einen Seite der Totpunktlage die Speicherkraft durch den Anschlag (4) am gemeinsamen Träger (3) aufgenommen wird und auf der anderen Seite der Totpunktlage die Speicherkraft das Getriebe (2) in einer Hubrichtung antreibt.

6. Vorrichtung nach Anspruch 5, dadurch gekennzeichnet, daß durch den Anschlag (4) ferner eine Ruheposition definiert ist, in welcher das Getriebe (2) ohne Last am Lastträger (27, 29, 30) gehalten ist.

7. Vorrichtung nach Anspruch 1, dadurch gekennzeichnet, daß die Antriebskraft des Kraftspeichers (1) über einen Kraftangriffspunkt (17) auf eine am gemeinsamen Träger (3) schwenkbar gelagerte Schwinge (6) übertragbar ist und daß ein die Last aufnehmender Schwenkarm (7) mit der Schwinge (6) koppelbar ist.

8. Vorrichtung nach Anspruch 7, dadurch gekennzeichnet, daß der Kraftangriffspunkt (17) des Kraftspeichers (1) durch Schwenken der Schwinge (6) in die Stellungen beidseits der Totpunktlage bringbar ist.

9. Vorrichtung nach einem der Ansprüche 1 bis 8, dadurch gekennzeichnet, daß am Ausleger (7, 39) ein Zweiradhalter (18) befestigbar ist.

## Claims

1. Apparatus for lifting and/or lowering a load on to or from a load carrier comprising an arm (7, 39) which is pivotably mounted to the load carrier (27, 29, 30) and securing means provided on the arm for a load, wherein the arm is pivotable about an axis (8) fixed to the load carrier into a lifted position in which the arm can be fixed for stable positioning of the lifted load on the load carrier, characterised in that in a lowered position for fixing the load to the arm (7, 39) the arm bears against an abutment (4) which is force-lockingly connected to the load carrier (27, 29, 30) and that the arm is connected by way of a transmission (2) to a force storage means (1) for the transmission of a force of the force storage means to the load.

2. Apparatus according to claim 1 characterised in that the load can be rigidly secured to the arm (7).

3. Apparatus according to claim 1 characterised in that the load can be pivotably secured to the arm (7, 39).

4. Apparatus according to claim 1 characterised in that the force storage means (1) and the transmission (2) are mounted on a common carrier (3) and that the direction of force with which the force storage means (1) acts on the transmission (2) is variable.

5. Apparatus according to claim 4 characterised in that the directions of the force of the force storage means (1) are at both sides of a dead centre position of the transmission (2), wherein on one side of the dead centre position the storage means force is carried by the abutment (4) on the common carrier (3) and on the other side of the dead centre position the storage means force drives the transmission (2) in a lifting direction.

6. Apparatus according to claim 5 characterised in that the abutment (4) further defines a rest position in which the transmission (2) is held without load on the load carrier (27, 29, 30).

7. Apparatus according to claim 1 characterised in that the drive force of the force storage means (1) can be transmitted by way of a force engagement point (17) to a rocker member (6) mounted pivotably on the common carrier (3) and that a pivot arm (7) accommodating the load can be coupled to the rocker member (6).

8. Apparatus according to claim 7 characterised in that the force engagement point (17) of the force storage means (1) can be moved into the positions on both sides of the dead centre position by pivotal movement of the rocker member (6).

9. Apparatus according to one of claims 1 to 8 characterised in that a two-wheeler holder (18) can be secured to the arm (7, 39).

## Revendications

1. Dispositif pour monter une charge sur un porte-charge et/ou l'en descendre, comportant un bras (7, 39) qui s'articule sur le porte-charge (27, 29, 30), et des moyens de fixation d'une charge prévus sur ce bras, le bras pouvant être basculé dans une position levée autour d'un axe (8) fixé au porte-charge, position dans laquelle il peut être fixé au porte-charge pour le positionnement stable de la charge levée, caractérisé par le fait que dans une position abaissée, le bras (7, 39), pour la fixation de la charge à lui, s'appuie sur une butée (4) liée par force au porte-charge (27, 29, 30), et que le bras est relié par un mécanisme (2) à un accumulateur d'énergie (1) pour la transmission d'une force de celui-ci à la charge.

2. Dispositif selon la revendication 1, caractérisé par le fait que la charge peut être fixée rigidement au bras (7).

3. Dispositif selon la revendication 1, caractérisé par le fait que la charge peut être fixée de manière articulée au bras (7, 39).

4. Dispositif selon la revendication 1, caractérisé par le fait que l'accumulateur d'énergie (1) et le mécanisme (2) sont montés sur un support commun (3) et que la direction de force avec laquelle l'accumulateur d'énergie (1) agit sur le mécanisme (2) est modifiable.

5. Dispositif selon la revendication 4, caractérisé par le fait que les directions de force de l'accumulateur d'énergie (1) sont situées des deux côtés d'une position de point mort du mécanisme (2), et d'un côté de la position de point mort, la force de l'accumulateur est absorbée par la butée (4) du support commun (3), et de l'autre côté de la position de point mort, la force de l'accumulateur meut le mécanisme (2) dans une direction d'élévation.

6. Dispositif selon la revendication 5, caractérisé par le fait que la butée (4) détermine en outre une position de repos dans laquelle le mécanisme (2) est maintenu sans charge sur le porte-charge (27, 29, 30).

7. Dispositif selon la revendication 1, caractérisé par le fait que la force motrice de l'accumulateur d'énergie (1) peut être transmise par un point d'application de force (17) à une barre oscillante (6) montée basculante sur le support commun (3), et qu'un bras basculant (7) recevant la charge peut être accouplé avec cette barre oscillante (6).

8. Dispositif selon la revendication 7, caractérisé par le fait que le point d'application de force (17) de l'accumulateur d'énergie (1) peut être mis dans les positions situées des deux côtés de la position de point mort par basculement de la barre oscillante (6).

9. Dispositif selon l'une des revendications 1 à 8, caractérisé par le fait qu'au bras (7, 39) peut être fixé un support de deux-roues (18).
